# EUROPEAN PATENT APPLICATION

(11) **EP 3 865 208 A1**
(43) Date of publication of application: **18.08.2021**
(21) Application number: 21156525.4
(22) Date of filing: 11.02.2021
(51) Int. Cl.: B01J 20/06, B01J 20/08, B01J 20/30, B01J 20/32, B01D 53/48, B01J 20/34

(54) **A HIGH TEMPERATURE-RESISTANT REGENERATIVE SORBENT FOR DESULFURIZATION OF HYDROGEN-RICH GAS MIXTURES**

(30) Priority: 14.02.2020 TR 202002296
(71) Applicant: Vestel Savunma Sanayi A.S., 06800 Ankara (TR)
(72) Inventor: PAMUK, Ibrahim, 06810 ANKARA (TR); DOGAN, Almila Bahar, ANKARA (TR); GULIYEV, Sadig, ANKARA (TR); DENIZ KAYNAR, Arife Derya, ANKARA (TR)
(74) Representative: Cayli, Hülya

(57) **Abstract**

According to the present invention, there are developed a desulphurization sorbent and a production method thereof. Said desulphurization sorbent comprises manganese, cerium and alumina as a support material. The desulphurization sorbent according to the invention comprises Manganese (II) acetate tetrahydrate ((CH₃COO)₂Mn.4H₂O) as the manganese source; comprises Cerium (III) nitrate hexahydrate (Ce(NO₃)₃.6H₂O) as the cerium source; and comprises commercial cylindrical γ-Al₂O₃ and de-ionized water as the support material. Dry impregnation method is used in the production of desulphurization sorbent according to the invention. The method comprises the steps of: calcining the alumina material in a muffle furnace at 850-00°C for at least 6 hours to obtain calcined alumina; dissolving the manganese acetate and cerium nitrate salts in at least one solvent to obtain metal solution; adding said metal solution onto said calcined alumina to obtain a semi-finished product; placing said semi-finished product into a beaker and keeping said beaker in ultrasonic bath in a closed manner at the range of 50 to 60°C for at least 2 hours; and leaving said semi-finished product to dry in a drying oven for at least 8 hours at at least 100°C and performing calcination at 850-900°C for at least 6 hours in the muffle furnace. Thanks to the invention, there is developed a regenerative and low-cost desulphurization sorbent, which can operate at high temperatures in hydrogen production systems, is suitable for the operating conditions of fuel reformer systems, and has a high sulphur retention capacity.

## Description

### Technical Field

The present invention relates to a desulfurization sorbent for use in removal of H₂S contained in hydrogen-rich gas mixtures, and to a method for preparing such a sorbent.

### Background of the Invention

As the reforming process allows production of hydrogen-rich gas mixtures, these gas mixtures are used for fuel cells. Hydrogen is required to be produced from a source, especially for the production of fuel cells, because hydrogen is difficult to transport, preserve and store, and it is not found in a pure state in nature. However, said hydrogen-rich gas mixture contains sulphurous compounds that are toxic. This significantly reduces the performance of the cells since sulphur compounds poison the fuel cell membranes. For the development of fuel cells (especially solid oxide fuel cells - SOFC), hydrogen-rich gas mixtures should be produced so that they do not contain toxic sulphur compounds. For this purpose, many studies are carried out on the preparation of desulphurization sorbents. An exemplary study is manganese-based regenerable sorbents for high temperature H₂S removal (Wang, J., Liang, B., and Parnas, R. (2013). Manganese-based regenerable sorbents for high temperature H2S removal. Fuel, 107, 539-546). In this study, sorbents containing 13.7%; 26.9%; 35.4%; 46.5% and 69.6% manganese by mass together with aluminium nitrate salt were prepared by a precipitation method for high-temperature desulphurization. While Al₂O₃ and Mn₃O₄ peaks were observed in the XRD patterns of the sorbent with low manganese content (13.7%), it was observed that the peak intensity of the Mn₂O₃ crystal phase increased as the manganese content increased. It was stated that when the manganese content is greater than 16.2%, the manganese oxides tend to revert to the Mn₂O₃ form due to the weak bonds between alumina and manganese in the sorbent form. Sulfidation experiments were carried out at 850°C with a flow rate of 50 ml/min using a ready-made gas mixture containing 1% H₂S in hydrogen. Regeneration studies were carried out using dilute air or SO₂ or steam, keeping the sulfidation conditions constant. While SO₂ and elemental sulphur were formed in the regeneration step carried out in dilute air environment, S₂ was formed in the regeneration step with SO₂, and H₂S was formed in the regeneration step with steam. Five consecutive sulfidation-regeneration cycles were performed to test sorbent stability. It was reported that as the manganese content, the amount of O₂ used in the regeneration step and the total flow rate in the regeneration step increased, the elemental sulphur conversion decreased. In another study (Zeng, Y., Kaytakoglu, S., and Harrison, D. P. (2000). Reduced cerium oxide as an efficient and durable high temperature desulfurization sorbent. Chemical Engineering Science, 55 (21), 4893-4900), reduced cerium oxide was used as a high-temperature desulphurisation sorbent. The experiments were carried out with twenty-five consecutive reduction-sulfidation-regeneration cycles. In the sulfidation step, the H₂S concentration dropped to 1 ppmv. It was reported that when the regeneration step was carried out using SO₂ gas, elemental sulphur was produced with the post-sulfidation product Ce₂O₂S. In another study, cerium oxide and copper containing sorbents were prepared from aqueous solutions of organic salts by urea precipitation gelation method (Kobayashi, M., and Flytzani-Stephanopoulos, M. (2002). Reduction and sulfidation kinetics of cerium oxide and Cu-modified cerium oxide. Industrial&Engineering Chemistry Research, 41 (13), 3115-3123). The reducibility and H₂S retention capacities of sorbents were analysed in the temperature range of 350°C to 750°C and pressure of 0.10 MPa. The researchers stated that the reduction of cerium oxide and its sulphur retention capacity increased with the presence of copper in the sorbent, and they reported that the most significant effect was observed in the sorbent containing 5% copper. Desulphurization studies were carried out using ZnO sorbents, which are generally used in many researches and easily available from the market. Sorbents used in the art evaporate at temperatures higher than 400°C and damage SOFC (solid oxide fuel cells). Therefore, it is necessary to reduce temperature of the hydrogen-rich gas mixture from 800°C to 400°C, which will be sent to the desulphurization unit after the reforming phase. This increases the number of heat exchangers and consequently the amount of power that the system must use in order to operate. In addition, size of the auxiliary power unit increases in direct proportion to these reasons.

### Brief Description of the Invention

A desulphurization sorbent according to the present invention, suitable for use in hydrogen production systems comprises manganese, cerium, and alumina as a support material. The desulphurization sorbent according to the present invention is used in reforming reactors; in hydrogen producing reactors; in refineries; in desulphurization units; in the fields where hydrogen is produced from sulphur-containing hydrocarbon fuels; or in power generation fields.

The present invention also provides a method for producing a desulphurization sorbent. The method comprises the steps of: calcining the alumina material in a muffle furnace at a range of 850 to 900°C for at least 6 hours to obtain calcined alumina; dissolving the manganese source and the cerium source in at least one solvent to obtain a metal solution thereof; adding said metal solution onto said calcined alumina to obtain a semi-finished product; placing said semi-finished product into a beaker and keeping said beaker in ultrasonic bath in a closed manner at the range of 50 to 60°C for at least 2 hours; and leaving said semi-finished product to dry in a drying oven for at least 8 hours at at least 100°C and performing calcination at 850-900°C for at least 6 hours in the muffle furnace.

### Object of the Invention

An object of the present invention is to provide a desulphurization sorbent for the separation of H₂S contained in hydrogen-rich gas mixtures, and a production method thereof.

Another object of the present invention is to provide a desulphurization sorbent suitable for use in hydrogen production systems, and a production method thereof.

A further object of the present invention is to provide a desulphurization sorbent which can operate at high temperatures and has a high H₂S retention capacity, and a production method thereof.

### Description of the Drawings

The visuals of the tests conducted for the desulphurization sorbent according to the present invention and the graphics of the results of these tests are illustrated in the attached drawings, in which:
Figure 1 is a schematic view of an exemplary test system by which desulphurization tests are carried out.
Figure 2 shows the adsorbed volume-relative pressure curve of the support material and the developed desulphurisation sorbent before sulfidation.
Figure 3 shows the dV/d (logd) - pore size (nm) distribution curve of the support material and the developed desulphurisation sorbent before sulfidation.
Figure 4 shows the adsorbed volume-relative pressure curve of the developed desulphurisation sorbent before and after the sulfidation.
Figure 5 shows the dV/d (logd) - pore size (nm) distribution curve of the developed desulphurisation sorbent before and after sulfidation.
Figure 6 shows the change of H₂S concentration in the reactor off-gas over time.
Figure 7 shows the sulphur content (%) in the "pre-break-through" region of the developed desulphurization sorbent.
Figure 8 shows the change of H₂S concentration in the reactor off-gas over time, after the first and second desulphurisation.
Figure 9 shows the change of H₂S concentration in the reactor off-gas over time, after the first regeneration.
Figure 10 shows the comparison of XRD patterns of the developed desulphurisation sorbent.

All the parts illustrated in figures are individually assigned a reference numeral and the corresponding terms of these numbers are listed below:

| | |
|---|---|
| First tank | (1) |
| Second tank | (2) |
| Mass flow meter | (3) |
| Soap flow meter | (4) |
| Reactor | (5) |
| Tube furnace | (6) |
| Reactor system | (7) |
| Variac | (8) |
| Heater tape | (9) |
| Sulphur condenser | (10) |
| Filter | (11) |
| FTIR | (12) |
| Computer | (13) |
| Curve of the support material | (2a) |
| Curve of the developed desulphurization sorbent | (2b) |
| Curve of the support material | (3a) |
| Curve of the developed desulphurization sorbent | (3b) |
| First curve | (4a) |
| Second curve | (4b) |
| Third curve | (5a) |
| Fourth curve | (5b) |
| First sulfidation curve | (8a) |
| Second sulfidation curve | (8b) |
| First regeneration curve | (9a) |

### Description of the Invention

It is necessary to produce hydrogen-rich gas mixture for fuel cells. Problems encountered in transporting, preserving and storing the hydrogen and the lack of pure hydrogen in nature affect the improvement of fuel cells (especially solid oxide fuel cells (SOFC)). Various problems arise when hydrogen, which must be produced for fuel cells, is produced by using the reforming method. For example, when diesel with high energy density is used as fuel in the reforming reaction, hydrogen-rich gas mixture can be obtained. However, since there are sulphurous compounds in the gas mixture that will poison fuel cells, auxiliary units are required to reduce the ratio of these sulphur compounds. In addition, the temperature of the hydrogen-rich gas mixture that will be sent to the desulphurization unit after the reforming step is too high, and the sorbents currently used to retain said sulphur do not operate at such a high temperature. For this reason, there is a need for a temperature-lowering step, that is, a heat exchanger. On the other hand, the developed methods affect dimensions and weight of the auxiliary units. Therefore, among the reforming systems developed by the industry, there is no reforming system suitable for use in mobile systems where all kinds of fuel can be used easily. Thus, it is necessary to provide reforming systems with high efficiency, which have low weight, small volume and do not require any external source (e.g. a heat source, a water supply). With the present invention, there are developed desulphurization sorbents and a production method thereof in order to separate sulphurous compounds from hydrogen-rich gas mixtures. Thanks to the invention, sulphur-containing fuels can also be used in the reforming process, wherein fuel limitation will be eliminated. Since all kinds of fuel can be used in fuel reformer systems, power units containing fuel cells can be used in a portable manner in all kinds of fields (for example in vehicles and mobile systems). Therefore, fuel supply, transportation and storage problems will be eliminated, which are one of the biggest problems of fuel cell (e.g. SOFC) systems.

The desulphurization sorbent according to the present invention contains manganese and cerium, and comprises alumina as a support material. Said manganese source is preferably Manganese (II) acetate tetrahydrate ((CH₃COO)₂Mn.4H₂O); while the cerium source is preferably Cerium (III) nitrate hexahydrate (Ce(NO₃)₃.6H₂O). When the cerium source is subjected to a calcination process at a high temperature, the surfactant evaporates and cerium dioxide (CeO₂) remains in the structure. Since cerium dioxide has a high oxygen storage capacity, the material easily regenerates after absorbing sulphur compounds. In other words, sulphur reacts with O₂ to form SO₂ and the material becomes reusable as it is purified from sulphur.

The desulphurisation sorbent according to the invention preferably comprises commercial cylindrical γ-Al₂O₃ as a support material. Manganese contained in the desulphurization sorbent was preferred since it has a high H₂S retention capacity at high temperatures; cerium dioxide was preferred since it provides convenience in the regeneration step with its oxygen storage feature; and alumina was preferred due to its high surface area and mechanical strength.

In a preferred embodiment of the present invention, said desulphurization sorbent preferably comprises manganese and cerium in a ratio of 3:1 (with a Mn/Ce ratio of 3: 1).

Desulphurization sorbents according to the present invention are used in reactors operating at high temperatures. The desulphurization sorbent according to invention is preferably used in desulphurisation units of refineries; in the fields where hydrogen is produced from sulphur-containing hydrocarbon fuels; or in power generation applications. Desulphurization sorbents according to the invention are preferably used in reforming reactors. Said desulphurisation sorbents operate at high temperatures and in the same reactor with reforming catalysts. In this way, the need for auxiliary units operating with the principle of lowering and increasing the temperature required by the reforming reactor is eliminated. Therefore, with the present invention, there is provided a desulphurization sorbent which can be used in fuel cells, can operate at high temperatures (compatible with the reformer), easy to regenerate and has a high H₂S retention capacity thanks to the manganese it contains.

The present invention also provides a method for producing the desulphurization sorbent according to the present invention. The method comprises the steps of:
- calcining the alumina material in a muffle furnace at 850-900°C for minimum 6 hours (preferably in the range of 6 to 8 hours) to obtain calcined alumina;
- dissolving the manganese source and the cerium source in at least one solvent (preferably de-ionized water, alcohol and/or mixtures thereof) to obtain a metal solution thereof;
- adding said metal solution onto said calcined alumina to obtain a semi-finished product;
- placing said semi-finished product into a beaker and keeping said beaker in ultrasonic bath in a closed manner at 50-60°C for minimum 2 hours (preferably 2 to 3 hours); and
- leaving said semi-finished product to dry in a drying oven for at least 8 hours (preferably 8 to 9 hours) at minimum 100°C (preferably 100 to 120°C) and subjecting the semi-finished product to calcination process at 850-900°C for at least 6 hours (preferably 6-8 hours) in the muffle furnace.

Desulphurisation sorbents developed within the scope of the invention are prepared by dry impregnation method. In the method according to the invention, said solvent is preferably 7.5 ml. In the step of obtaining the semi-finished product covered by the production method according to the invention, metal solution is preferably added dropwise onto the calcined alumina.

In a preferred embodiment of the present invention, said manganese source comprises Manganese (II) acetate tetrahydrate ((CH₃COO)₂Mn.4H₂O) and said cerium source comprises Cerium (III) nitrate hexahydrate (Ce(NO₃)₃.6H₂O) salts. Thanks to the method according to the invention, a desulphurization sorbent with oxygen storage feature is provided, which has a high H₂S retention capacity at high temperatures. Since said alumina material preferably comprises commercial cylindrical γ-Al₂O₃, a desulfurization sorbent having a support material with a large surface area and a high mechanical strength is provided.

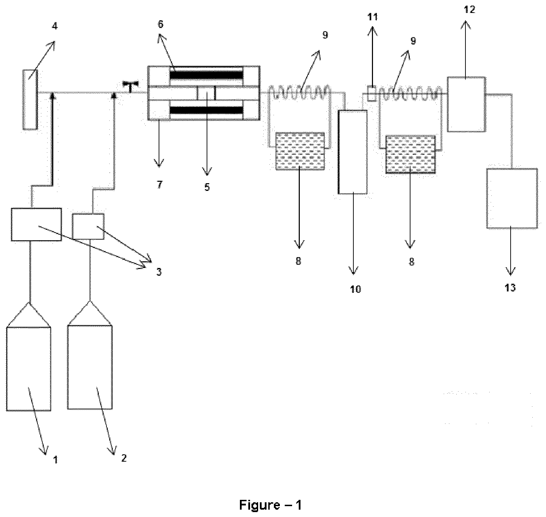

In a preferred embodiment of the present invention, tests have been carried out to examine the developed desulphurization sorbents. An example of the test system prepared for said desulphurization sorbents is shown in Figure 1. Said test system preferably comprises a reactor system (7) and a Fourier Transform Infrared Spectrometer (FT-IR) (12) which is connected online to the outlet of the reactor system (7) and enables the analysis of the off-gases. Said reactor system (7) comprises a reactor (5) in which the reaction takes place; and a tube furnace (6) which provides temperature control of the reactor (5). Gas is transmitted to the reactor (5) from a first tank (1) and a second tank (2). The first tank (1) contains a gas mixture of He and H₂S, and the second tank (2) contains He gas. A mass flow meter (3) and a soap flow meter (4) are located on the lines through which these tanks are conveyed to the reactor (5). Said reactor (5) is preferably selected as a packed column reactor. Heater tapes (9) and variacs (8) are placed at the outlet of the reactor (5). There is a sulphur condenser (10) and a filter (11) between said heater tapes (9). The test setup also comprises a Fourier Transform Infrared Spectrometer (FT-IR) (12) which enables the analysis of said off-gases; and a computer (13) connected thereto. In said test, first of all, He is transmitted to the reactor (5) from a second tank (2) at a flow rate of 100 ml/min. Therefore, the gas cell is cleaned. Within the scope of the test, said reactor (5) is preferably selected as a packed column reactor with an outer diameter of 1.6 cm and a length of 75 cm. Desulphurization sorbent according to the present invention is placed in said reactor (5), and said desulphurization sorbents are preferably in the form of pellets/tablets. Vibrators are used in order to reduce the gaps between said pellets. The back of the sorbent is supported by glass wool. Thus, the reactor (5) is prepared and placed in the tube furnace (6). Heater tapes (9) are added to the test setup in order to prevent the water vapor, which is generated during the reactions, from evaporating at the outlet of the reactor (5). The temperature of said heater strips (9) is preferably adjusted to 100°C. Afterwards, He is sent to the reactor (5) again, thus ensuring the removal of moisture and impurities in the sorbent. In the next step, the temperature of the tube furnace (6) is adjusted to 800°C. Within the scope of said test, a reference gas mixture containing 1% H₂S and 99% He is supplied from the first tank (1). The H₂S discharge rate is adjusted to 1 ml/min so that the total flow rate in the bypass line is 100 ml/min. The resulting gas mixture is sent to the system, and spectra are obtained from the FT-IR (12) device against time. H₂O, SO₂ and H₂S gases contained in the reactor (5) off-gas stream is analysed. Concentrations of gas components are determined by calibration of the FT-IR (12) device with H₂S in the wavelength range of 2614-2772 cm⁻¹, with SO² in the wavelength range of 1050-1230 cm⁻¹ and with H₂O in the wavelength range of 1414-1972 cm⁻¹. Desulphurization is completed when these processes are completed, and then, the reactor (5) is heated to 120°C such that the cleaning process is performed by passing He at a flow rate of 100 ml/min.

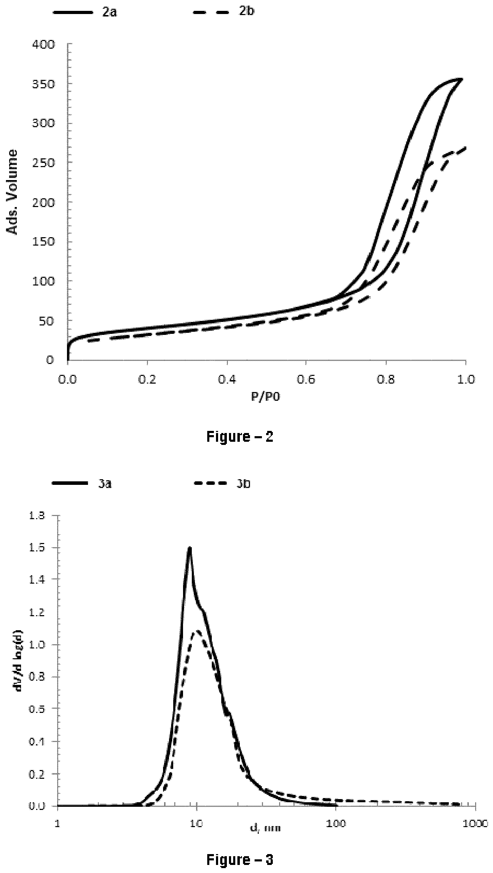

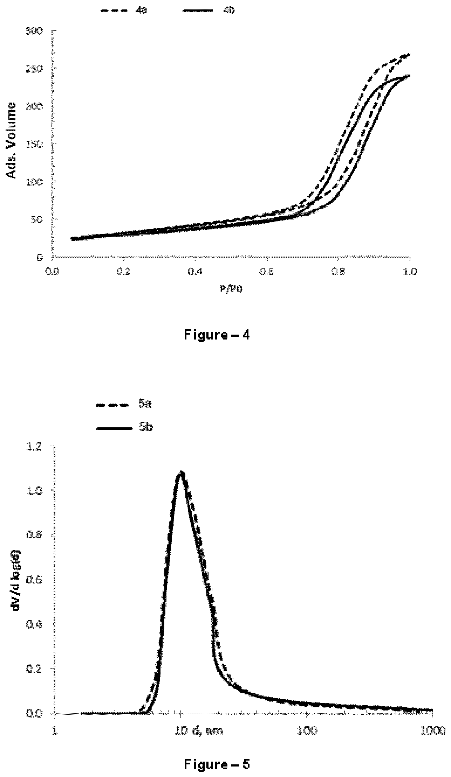

In another preferred embodiment of the present invention, X-Ray Diffraction method (XRD), Energy dispersive X-ray spectroscopy (EDS) and analysis of said desulphurization sorbents are performed. Figures 2 to 5 comprises comparative graphs of N₂ adsorption-desorption isotherms and pore diameter distributions of the developed desulphurization sorbent (3Mn1Ce@Al₂O₃-KE sorbent was prepared within the scope of the test) before and after sulfidation and the alumina as a support material before the sulfidation. Figure 2 shows the graph of the absorbed volume (cm³/g) with respect to the relative pressure (P/P⁰) under standard temperature and pressure. In Figure 2, the curve of alumina (Al₂O₃) as the support material is shown as 2a; and the curve of the desulphurisation sorbent (3Mn1Ce@Al₂O₃-KE) according to the invention before the sulfidation is shown as 2b. Figure 2 shows that said support material alumina and 3Mn1Ce@Al₂O₃-KE sorbent are compatible with Type IV isotherm and mesoporous structure is formed. In the type IV adsorption isotherm, the adsorption at high relative pressures occurs not on open surfaces but in mesopores. Moreover, Figure 3 shows the dV/d (logd) - pore size (nm) distribution curve. In Figure 3, the curve of alumina (Al₂O₃) as the support material is shown as 3a; and the curve of the desulphurisation sorbent (3Mn1Ce@Al₂O₃-KE) according to the invention before the sulfidation is shown as 3b. It is seen in Figure 3 that the support material alumina and said desulphurization sorbent have uniform pore distribution. Figure 4 shows the graph of the absorbed volume (cm³/g) with respect to the relative pressure (P/P⁰) under standard temperature and pressure. In Figure 4, the first curve of said desulphurisation sorbent (3Mn1Ce@Al₂O₃-KE) before the sulfidation is shown as 4a; and the second curve of said desulphurisation sorbent (3Mn1Ce@Al₂O₃-KE) after the sulfidation is shown as 4b. When the first curve (4a) and the second curve (4b) shown in this way are examined, it is clearly seen that the mesoporous structure is preserved before and after sulfidation. Figure 5 shows the dV/d (logd) - pore size (nm) distribution curve. In Figure 5, the third curve of the desulphurisation sorbent (3Mn1Ce@Al₂O₃-KE) before the sulfidation is shown as 5a; and the fourth curve of the desulphurisation sorbent (3Mn1Ce@Al₂O₃-KE) after the sulfidation is shown as 5b. When the third curve (5a) and the fourth curve (5b) indicated in this way is examined, it is clearly seen that the uniform pore diameter distribution is preserved before and after sulfidation.

According to the present invention, EDS (Energy dispersive X-ray spectroscopy) analysis of the desulphurization sorbent prepared by using the dry impregnation method described with the invention has been made, and the analysis results are shown in table 1. In Table 1, the Mn-Ce ratio and the sulphur retention capacity of the desulphurization sorbent are compared. The analysis was carried out at 800°C using 1% H₂S-He mixture and 0.5 g sorbent.

**Table 1. Mn-Ce ratio and sulphur retention capacity**

| Sorbent | % Weight (Mn+Ce) | | | Sulphur retention capacity g S/g sorbent (EDS) | Sorbent performance (%) |
|---|---|---|---|---|---|
| | Synthesis Phase | Outer surface of the pellet (EDS) | Inner surface of the pellet (EDS) | | |
| 3Mn1Ce@Al₂O₃-KE | 20 | 31,0 | 18,5 | 0,030 | 38 |

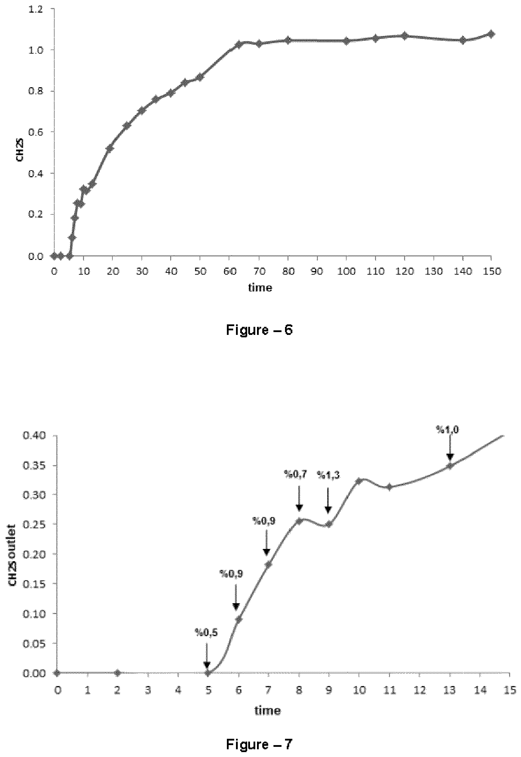

After the desulphurization tests performed with desulphurization sorbents according to the invention, "break-through" curves are obtained. These curves are obtained by plotting the H₂S concentration in the gas stream of the reactor (5) outlet against time. Desulphurization tests are concluded when the H₂S concentration in the incoming gas mixture and the H₂S concentration in the gas mixture leaving the reactor (5) are equal to each other and the column reaches saturation in the "break-through" curves. The steepness of the "S" shaped curve obtained provides information about the reaction rate between the H₂S and the metal oxide sorbent. Results of the desulfurization test, which was carried out for 150 minutes, are given in Figure 6. Figure 6 shows the graph of H₂S concentration (%) over time (min) and indicates the change of H₂S concentration of the desulphurization sorbent at the reactor (5) outlet over time. Figure 6 is given for 1% H₂S-99% N₂ gas mixture with a flow of 100 ml/min at 800°C sulfidation temperature.

It is very important for hydrogen production systems that the H₂S gas in the hydrogen-rich gas mixture is retained by the sorbent and desulphurization is completed before reaching high concentrations at the column outlet. In this context, it is necessary to determine the sulphur retention capacity in the "pre-break-through" region of the sorbent. "Pre-break-through" is the region where the H₂S is still retained by the column containing the alumina supported Mn-Ce sorbent, indicating that the column has begun to saturate. The graph prepared for said "pre-break-through" region is given in Figure 7. Desulphurization tests were repeated by halting the tests at 5th, 6th, 7th, 8th, 9th and 13rd minutes to examine the "pre-break-through" time of 3Mn1Ce@Al₂O₃-KE sorbent. As can be seen in Figure 7, the graph of H₂S concentration (%) over time (min) for the pre-break-through region is shown. After desulphurization tests that were halted at different times in this region, the sulphur retention capacity of alumina supported Mn-Ce sorbent was determined by EDS analysis. Pellets were broken lengthwise and EDS analyses were repeated in different parts. 0.5% sulphur is retained by the sorbent in the 5th minute of the sulfidation; 0.7% is retained at the 8th minute; 1.0% is retained at the 13rd minute; and 4.2% sulphur is retained on average at the end of 45 minutes.

In the sulfidation step, the gas mixture containing H₂S reacts with metal oxide sorbents and turns into metal sulphur form. The reaction equation for this transformation is given below.

MeO+ H₂S → MeS + H2O

In the regeneration step, on the other hand, metal sulphur sorbents formed in the sulfidation step is enabled to be re-used by using O₂, SO₂, water vapor and/or mixtures thereof. An example of the regeneration step is given in the reaction equation below. In this test conducted within the scope of the invention, O₂-N₂ gas mixture was used in the regeneration step.

MeS+ O₂ → MeO + SO₂

Loop testing were carried out with alumina supported Mn-Ce sorbent in the sulfidation-regeneration cycle system in order to ensure the recovery of the sorbent. The sulfidation-regeneration cycle of the 3Mn1Ce@Al₂O₃-KE sorbent according to the invention was repeated twice under the same conditions.

SO₂ was observed in the reactor gas outlet stream in the 1st regeneration. Significant SO₂ gas formation indicates that the sorbent can be regenerated. The regeneration step was continued until SO₂ could not be analysed, and in addition, O₂-N₂ gas mixture was passed over the sorbent for another half hour. After the regeneration step, the sulphur content on the sorbent determined by EDS analysis is 1.3% and 1.5%. These values are the manganese sulphur content remaining from regeneration in the sorbent.

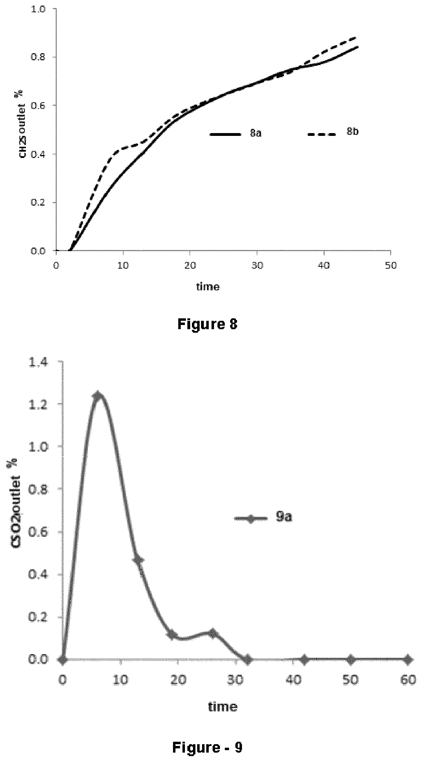

The sulfidation-regeneration-sulfidation cycle was completed in order to examine the sulphur retention performance of the sorbent in the next cycle. Figure 8 shows the graph of the H₂S concentration (%) in the off-gas over time (min) with EDS analysis. In Figure 8, the first sulfidation curve is shown as 8a; and the second sulfidation curve is shown as 8b. Values related to the regeneration step are shown in Figure 9. In Figure 9, the graph of SO₂ gas concentration (%) over time (min) with EDS analysis is shown, wherein the first regeneration curve is shown as 9a. As can be seen from the curves 8a and 8b in Figure 8, sulfidation increases over time and provides stable "break-through" curves. These curves clearly show that the desulphurization sorbent according to the invention can be regenerated. In Figure 8 and Figure 9, the sulfidation temperature is 800°C. Sulphur retention capacities (sulphur, gr/sorbent, gr) determined by EDS analysis after said loop testing are shown in table 2. As seen in Table 2, the sulphur rate in the sorbent has decreased by approximately 66% after the regeneration study. After the second sulfidation study, the sulphur retention rate of the sorbent reaches the first sulfidation value. Sulfidation-Regeneration-Sulfidation cycle was performed and sulphur balance was performed around the reactor (5) by using the EDS results. In the sulphur balance, the sulphur from SO₂ released in the regeneration step and the sulphur remaining in the sorbent structure at the end of the regeneration are equal to the amount of sulphur retained in the sulfidation step in the same cycle.

**Table 2. Sulphur retention capacities of 3Mn1Ce@Al₂O₃-KE sorbent after loop testing**

| Process | 1. sulfidation | 1. regeneration | 2. sulfidation |
|---|---|---|---|
| Sulphur retention capacity (sulphur, gr/ sorbent, gr) | 0,044 | 0,014 | 0,048 |

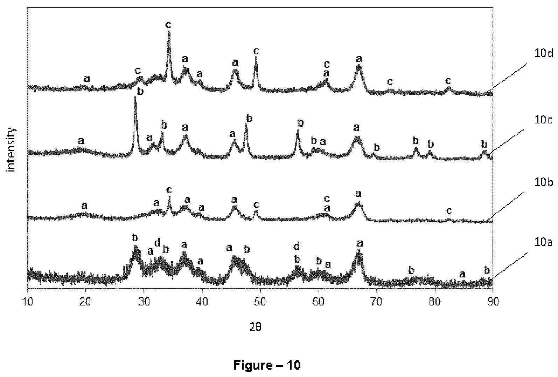

The results of the XRD analysis performed before sulfidation, first sulfidation, first regeneration and second sulfidation of sorbent are shown in Figure 10 comparatively. In Figure 10, the pre-sulfidation XRD patterns are shown as 10a, the first post-sulfidation XRD patterns are shown as 10b, the first post-regeneration XRD patterns are shown as 10c, and the second post-sulfidation XRD patterns are shown as 10d. Peaks shown as "a" in Figure 10 are aluminium oxide (Al₂O₃), peaks shown as "b" are cerium oxide (CeO₂), peaks shown as "c" are manganese sulphide (MnS) and peaks shown as "d" are manganese oxide (Mn₂O₃). When the pre-sulfidation curve (10a) of the 3Mn1Ce@Al₂O₃-KE sorbent according to the invention is examined, the peaks of *γ*-Al₂O₃, Mn₂O₃ and CeO₂ are seen. After the first sulfidation (10b), *γ*-Al₂O₃ and MnS peaks are observed. After the first regeneration (10c) *γ*-Al₂O₃ and CeO₂ peaks are observed while *γ*-Al₂O₃ and MnS peaks are observed after the second sulfidation (10d).

Comparison of the results of XRD analysis performed before sulfidation, after the first sulfidation, after the first regeneration and after the second sulfidation with the literature are given in Table 3, Table 4 and Table 5, respectively. Sorbent with γ-Al₂O₃, Mn₂O₃ and CeO₂ characteristic peaks before sulfidation is observed to have γ-Al₂O₃ and MnS peaks in XRD patterns after the first sulfidation. After the first regeneration step, γ-Al₂O₃ and CeO₂ peaks are found in the sorbent again, while γ-Al₂O₃ and MnS peaks are observed in the sorbent after the second sulfidation. After the first regeneration, XRD patterns show that the sorbent can be regenerated. In addition, sulphur determined by EDS analysis after the first regeneration was not analysed by XRD. It was determined by EDS and XRD analyses that sorbent has a stable structure in sulfidation-regeneration cycles.

**Table 3. Comparison of the XRD data of the developed sorbent after the first sulfidation with the literature**

| Sample 3Mn1Ce@Al₂O₃-KE After 1st Sulfidation | | | Literature | | | |
|---|---|---|---|---|---|---|
| | | | γ-Al₂O₃ File No: 29-63 | | MnS | |
| 2θ | d(A°) | I/I₀ | d(A°) | I/I₀ | d(A°) | I/I₀ |
| 19,22 | 4,61 | 33 | 4,53 | 35 | - | - |
| - | - | - | - | - | 3,01 | 13 |
| 32,66 | 2,74 | 34 | 2,80 | 45 | | |
| 34,32 | 2,61 | 98 | - | - | 2,61 | 100 |
| 37,04 | 2,43 | 54 | 2,39 | 65 | - | - |
| 39,52 | 2,28 | 24 | 2,28 | 40 | - | - |
| 45,34 | 2,00 | 73 | 1,98 | 80 | - | - |
| 49,24 | 1,85 | 55 | - | - | 1,85 | 62 |
| 60,96 | 1,52 | 33 | 1,53 | 10 | 1,51 | 19 |
| 66,98 | 1,40 | 100 | 1,40 | 100 | - | - |
| - | - | - | - | - | 1,31 | 8 |
| - | - | - | - | - | 1,20 | 2 |
| 82,32 | 1,17 | 20 | - | - | 1,17 | 21 |

**Table 4. Comparison of the XRD data of the developed sorbent after the first regeneration with the literature**

| Sample 3Mn1Ce@Al₂O₃-KE After 1st Regeneration | | | Literature | | | |
|---|---|---|---|---|---|---|
| | | | CeO₂ File No: 4-593 | | γ-Al₂O₃ File No: 29-63 | |
| 2θ | d(A°) | I/I₀ | d(A°) | I/I₀ | d(A°) | I/I₀ |
| 19,02 | 4,66 | 10 | - | - | 4,53 | 35 |
| 28,52 | 3,13 | 100 | 3,12 | 100 | - | - |
| 31,30 | 2,86 | 17 | - | - | 2,80 | 45 |
| 33,03 | 2,71 | 39 | 2,71 | 29 | - | - |
| 37,00 | 2,43 | 32 | - | - | 2,39 | 65 |
| 38,56 | 2,33 | 10 | - | - | 2,28 | 40 |
| 45,56 | 1,99 | 33 | - | - | 1,98 | 80 |
| 47,56 | 1,91 | 58 | 1,91 | 51 | - | - |
| 56,26 | 1,63 | 41 | 1,63 | 44 | - | - |
| 59,16 | 1,56 | 15 | 1,56 | 5 | - | - |
| 60,08 | 1,54 | 14 | - | - | 1,53 | 10 |
| 66,04 | 1,41 | 36 | - | - | 1,40 | 100 |
| 69,46 | 1,35 | 10 | 1,35 | 8 | - | - |
| 76,74 | 1,24 | 17 | 1,24 | 15 | - | - |
| 78,96 | 1,21 | 12 | 1,21 | 8 | - | - |
| 88,56 | 1,10 | 15 | 1,10 | 12 | - | - |

**Table 5. Comparison of the XRD data of the developed sorbent after the second sulfidation with the literature**

| Sample 3Mn1Ce@Al₂O₃-KE After 2nd Sulfidation | | | Literature | | | |
|---|---|---|---|---|---|---|
| | | | γ-Al₂O₃ File No: 29-63 | | MnS | |
| 2θ | d(A°) | I/I₀ | d(A°) | I/I₀ | d(A°) | I/I₀ |
| 19,22 | 4,61 | 90 | 4,53 | 35 | - | - |
| 29,42 | 3,03 | 17 | - | - | 3,01 | 13 |
| 31,92 | 2,80 | 19 | 2,80 | 45 | - | - |
| 34,18 | 2,62 | 100 | - | - | 2,61 | 100 |
| 36,86 | 2,44 | 34 | 2,39 | 65 | - | - |
| 39,58 | 2,28 | 11 | 2,28 | 40 | - | - |
| 45,54 | 1,99 | 35 | 1,98 | 80 | - | - |
| 49,18 | 1,85 | 62 | - | - | 1,85 | 62 |
| 61,24 | 1,51 | 26 | 1,53 | 10 | 1,51 | 19 |
| 66,82 | 1,40 | 53 | 1,40 | 100 | - | - |
| 72,10 | 1,31 | 9 | - | - | 1,31 | 8 |
| - | - | - | - | - | 1,20 | 2 |
| 82,18 | 1,17 | 16 | - | - | 1,17 | 21 |

Thanks to the desulphurization sorbent according to the present invention suitable for operating at high temperatures and the production method thereof, the need for temperature reduction and raising steps in the operating principle of the systems is eliminated. Moreover, reforming catalyst and desulphurization sorbent will be able to operate in the same reactor since they can operate at the same temperature, and a great progress will be made for the purpose of reducing the volume. In order to solve above-mentioned problems, there is developed a desulphurisation sorbent which is not available in the literature, comprises alumina supported manganese and cerium, can operate at high temperatures (compatible with reformer) so that it is used in fuel cells, easy to regenerate and has high H2ₛ retention capacity. Thanks to the method according to the invention, low cost regenerative desulphurization sorbents with high sulphur retention capacity and high service life are obtained.

## Claims

1. A desulphurization sorbent suitable for use in hydrogen production systems, **characterized by** comprising manganese, cerium, and alumina as a support material.

2. A desulphurization sorbent according to claim 1, **characterized by** comprising manganese and cerium in a mole ratio of 3:1.

3. A desulphurization sorbent according to any of the preceding claims, **characterized by** comprising commercial cylindrical γ-Al₂O₃ as a support material.

4. A desulphurization sorbent according to any of the preceding claims, **characterized in that** said manganese source is Manganese (II) acetate tetrahydrate.

5. A desulphurization sorbent according to any of the preceding claims, **characterized in that** said cerium source is Cerium (III) nitrate hexahydrate.

6. Use of a desulphurization sorbent according to any of the preceding claims in hydrogen production reactors.

7. Use of a desulphurization sorbent according to any of the claims 1 to 3 in reforming reactors.

8. Use of a desulphurization sorbent according to any of the claims 1 to 3 in refineries; in desulfurization units; in the fields where hydrogen is produced from sulphur-containing hydrocarbon fuels; or in power generation fields.

9. A method for producing a desulphurization sorbent suitable for use in hydrogen production systems, **characterized by** comprising the steps of:
- calcining the alumina material in a muffle furnace at a range of 850 to 900°C for at least 6 hours to obtain calcined alumina;
- dissolving the manganese source and the cerium source in at least one solvent to obtain a metal solution thereof;
- adding said metal solution onto said calcined alumina to obtain a semi-finished product;
- placing said semi-finished product into a beaker and keeping said beaker in ultrasonic bath in a closed manner at the range of 50 to 60°C for at least 2 hours; and
- leaving said semi-finished product to dry in a drying oven for at least 8 hours at at least 100°C and performing calcination at 850-900°C for at least 6 hours in the muffle furnace.

10. A production method according to claim 9, **characterized in that** the at least one solvent comprises de-ionized water, alcohol and/or mixtures thereof.

11. A production method according to claim 9, **characterized in that** volume of the at least one solvent is 7.5 ml.

12. A production method according to claim 9, **characterized in that** metal solution is added dropwise onto the semi-finished product.
